# EUROPÄISCHE PATENTSCHRIFT

(11) **EP 3 383 137 B1**
(45) Veröffentlichungstag und Bekanntmachung des Hinweises auf die Patenterteilung: **02.03.2022**
(21) Anmeldenummer: 18161951.1
(22) Anmeldetag: 15.03.2018
(51) Int. Cl.: H05B 6/12, H05B 6/36

(54) **INDUKTIONSKOCHFELDVORRICHTUNG**
INDUCTION HOB DEVICE
DISPOSITIF FORMANT PLAQUE DE CUISSON À INDUCTION

(30) Priorität: 30.03.2017 ES 201730510
(43) Veröffentlichungstag der Anmeldung: 03.10.2018
(73) Patentinhaber: BSH Hausgeräte GmbH, 81739 München (DE)
(72) Erfinder: Acero Acero, Jesus, 50002 Zaragoza (ES); Carretero Chamarro, Claudio, 50003 Zaragoza (ES); Hernandez Blasco, Pablo Jesus, 50019 Zaragoza (ES); Llorente Gil, Sergio, 50009 Zaragoza (ES); Lope Moratilla, Ignacio, 50010 Zaragoza (ES); Moya Albertin, Maria Elena, 50002 Zaragoza (ES); Serrano Trullen, Javier, 50017 Zaragoza (ES)

(56) Entgegenhaltungen:
- WO-A1-2015/012765
- DE-A1-102013 206 870
- JP-A- 2011 124 115
- US-A1- 2008 174 397
- US-A1- 2009 004 318
- US-A1- 2013 199 027

## Beschreibung

Die Erfindung betrifft eine Induktionskochfeldvorrichtung nach dem Oberbegriff des Anspruchs 1 und ein Verfahren zu einer Herstellung einer Induktionskochfeldvorrichtung nach dem Oberbegriff des Anspruchs 11.

Aus der deutschen Patentanmeldung DE 10 2013 214433 A1 ist bereits eine Induktionskochfeldvorrichtung mit mehreren Induktionsheizleitungen bekannt, welche an und teilweise in einem Substrat angeordnet sind. Eine Dichte an Induktionsheizleitungen ist in einem Vergleich zu aus dem Stand der Technik bekannten Litzendrähten sehr gering, was zu hohen Gleichstromverlusten führt. Ein weiteres Problem besteht darin, dass aufgrund der speziellen Anwendung im Fall eines Induktionskochfelds ein magnetisches Feld mit einer großen vertikalen Komponente auf die Leiterplatte und damit auf die an der Leiterplatte angeordneten Induktionsheizleitungen einfällt. Da Wechselstromverluste aufgrund eines alternierenden Magnetfelds bei einer rechteckigen Gestalt größer sind, wenn das Feld auf eine lange Seite der rechteckigen Gestalt trifft, resultiert für die Anwendung einer solchen Leiterplatte mit daran angeordneten Induktionsheizleitungen eine unvorteilhafte Situation. Die Dokumenten DE 10 2013 206 870 A1 und US 2013/0199027 beschreiben weiter Induktionskochfeldvorrichtungen nach dem Stand der Technik.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einer Induktionskochfeldvorrichtung mit zumindest zwei, insbesondere zumindest drei, vorteilhaft zumindest vier, besonders vorteilhaft zumindest acht, vorzugsweise zumindest zwölf und besonders bevorzugt einer Vielzahl an Induktionsheizleitungen und mit zumindest einer Leiterplatte, an und/oder in welcher die Induktionsheizleitungen angeordnet sind.

Es wird vorgeschlagen, dass die Leiterplatte als eine flexible Leiterplatte ausgebildet ist. Durch die erfindungsgemäße Ausgestaltung kann insbesondere eine hohe Effizienz erreicht werden, welche insbesondere auf geringen Gleichstromverlusten und/oder auf geringen Wechselstromverlusten basiert. Insbesondere können geringe Kosten ermöglicht werden, und zwar insbesondere durch eine hohe Dichte an Induktionsheizleitungen. Eine hohe Gestaltungsfreiheit, insbesondere in Bezug auf eine Anordnung und/oder Gestalt der Leiterplatte, kann insbesondere ermöglicht werden. In einem Vergleich zu aus dem Stand der Technik bekannten Lösungen kann insbesondere eine Effizienz erhöht werden, und zwar vorteilhaft hinsichtlich Kosten und/oder Leistungsfähigkeit bei hohen Frequenzen.

Unter einer "Induktionskochfeldvorrichtung" soll insbesondere zumindest ein Teil, insbesondere eine Unterbaugruppe, eines Induktionskochfelds verstanden werden. Unter einer "Induktionsheizleitung" soll insbesondere ein Element verstanden werden, das in wenigstens einem Betriebszustand insbesondere hochfrequenten elektrischen Strom führt und insbesondere mittels des elektrischen Stroms zumindest ein insbesondere elektromagnetisches Wechselfeld zu einer Beheizung eines insbesondere aufgestellten Gargeschirrs bereitstellt. Insbesondere ist eine Induktionsheizleitung als ein Draht und vorteilhaft als ein Litzendraht ausgebildet. Die Induktionsheizleitung ist insbesondere Teil zumindest eines Induktionsheizelements. Die Induktionskochfeldvorrichtung weist insbesondere zumindest ein Induktionsheizelement auf, welches insbesondere die Induktionsheizleitungen aufweist. Insbesondere sind die Induktionsheizleitungen, und zwar insbesondere alle Induktionsheizleitungen, Teil eines insbesondere einzigen Induktionsheizelements.

Unter einer "Leiterplatte" soll in diesem Zusammenhang insbesondere eine Einheit verstanden werden, welche in wenigstens einem montierten Zustand zumindest ein elektronisches und/oder elektrisches Bauteil trägt. Die Leiterplatte weist insbesondere zumindest ein Substrat auf, welches insbesondere eine Grundplatte der Leiterplatte ausbildet und welches insbesondere eine wenigstens im Wesentlichen plattenförmige Gestalt aufweist. Insbesondere kann die Leiterplatte zumindest Leiterbahnen umfassen, welche an dem Substrat der Leiterplatte angebracht und/oder wenigstens teilweise in das Substrat eingebracht sein können und welche insbesondere die Induktionsheizleitungen ausbilden können. Unter einem "Substrat" soll in diesem Zusammenhang insbesondere ein Trägerelement verstanden werden, das dazu vorgesehen ist, eine Basisschicht für eine optische Leiterplatte zu bilden. Das Substrat könnte insbesondere wenigstens zu einem Großteil aus elektrisch isolierendem Material bestehen. Das Substrat kann insbesondere wenigstens zu einem Großteil aus einem Hartpapier und/oder aus einem Polymerkunststoff und/oder aus einer Polymerkunststofffolie und/oder aus zumindest einem Polyimid-Kunststoff und/oder aus einem faserverstärkten Kunststoff und/oder aus einer Kombination verschiedener Materialien gefertigt sein. Insbesondere kann das Substrat einlagig oder mehrlagig ausgeführt sein. Das Substrat könnte insbesondere zumindest zwei, vorteilhaft zumindest vier, besonders vorteilhaft zumindest acht und vorzugsweise mehrere Lagen aufweisen, welche beispielsweise zusammenlaminiert sein könnten. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden.

Erfindungsgemäß sind die Induktionsheizleitungen an der Leiterplatte, insbesondere an dem Substrat der Leiterplatte, befestigt und/oder angebracht . Beispielsweise könnten die Induktionsheizleitungen an der Leiterplatte, insbesondere an dem Substrat der Leiterplatte, mittels einer stoffschlüssigen Verbindung angebracht sein, wie beispielsweise mittels einer Klebeverbindung und/oder mittels eines Beschichtungsverfahrens. Die Induktionsheizleitungen könnten insbesondere in Form einer Beschichtung an der Leiterplatte, insbesondere an dem Substrat der Leiterplatte, angebracht sein, und zwar insbesondere auf einer Oberfläche der Leiterplatte, insbesondere des Substrats der Leiterplatte. Alternativ oder zusätzlich könnte die Leiterplatte zumindest eine insbesondere vollflächige und vorteilhaft elektrisch leitfähige Beschichtung aufweisen, aus welcher insbesondere durch Entfernen eines Großteils der Beschichtung die Induktionsheizleitungen in die Leiterplatte eingebracht sein könnten, wie beispielsweise mittels eines Ätzprozesses und/oder mittels eines Laserprozesses.

Unter einer "flexiblen" Leiterplatte soll insbesondere eine Leiterplatte verstanden werden, deren Form insbesondere unter Einwirkung einer Kraft von maximal 100 N, insbesondere von maximal 75 N, vorteilhaft von maximal 50 N, besonders vorteilhaft von maximal 25 N, vorzugsweise von maximal 10 N und besonders bevorzugt von maximal 5 N veränderbar ist. Die flexible Leiterplatte ist insbesondere biegbar und/oder faltbar und/oder dehnbar, und zwar insbesondere unter Vermeidung einer Zerstörung der Leiterplatte und/oder eines Bruchs der Leiterplatte.

In wenigstens einem montierten Zustand ist die flexible Leiterplatte insbesondere derart eingebaut und/oder fixiert, dass die Leiterplatte insbesondere unbeweglich ist. In wenigstens einem demontierten Zustand, welcher zeitlich insbesondere vor und/oder nach dem montierten Zustand sein könnte, ist die flexible Leiterplatte insbesondere flexibel.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Leiterplatte eine Dicke von maximal 300 µm, insbesondere von maximal 270 µm, vorteilhaft von maximal 250 µm, besonders vorteilhaft von maximal 230 µm, vorzugsweise von maximal 200 µm und besonders bevorzugt von maximal 170 µm aufweist. Insbesondere weist die Leiterplatte eine Dicke von mindestens 1 µm, insbesondere von mindestens 10 µm, vorteilhaft von mindestens 20 µm, besonders vorteilhaft von mindestens 50 µm und vorzugsweise von mindestens 70 µm auf. Die Leiterplatte ist insbesondere als eine extra dünne Leiterplatte ausgebildet. Unter einer "Dicke" eines Objekts soll, insbesondere in einem ungefalteten Zustand des Objekts, insbesondere eine Länge einer kürzesten Seite eines kleinsten gedachten geometrischen Quaders verstanden werden, welcher das Objekt gerade noch vollständig umschließt. Insbesondere ist die Dicke der Leiterplatte wesentlich kleiner als zumindest eine zu der Dicke senkrecht ausgerichtete Erstreckung der Leiterplatte und vorteilhaft als zwei zu der Dicke senkrecht ausgerichtete Erstreckungen der Leiterplatte. Dadurch kann insbesondere eine kompakte Ausgestaltung erzielt werden.

Zudem wird vorgeschlagen, dass die Induktionsheizleitungen elektrisch parallel zueinander geschaltet und insbesondere Teil eines einzigen Induktionsheizelements sind, wodurch insbesondere eine besonders vorteilhafte Beheizung von insbesondere aufgestelltem Gargeschirr ermöglicht werden kann.

Die Leiterplatte könnte beispielsweise genau eine, insbesondere einzige Lage aufweisen, über welche sich die Induktionsheizleitungen erstrecken könnten. Vorzugsweise weist die Leiterplatte zumindest zwei Lagen auf, über die sich die Induktionsheizleitungen erstrecken. Insbesondere könnten die Induktionsheizleitungen auf allen Lagen der Leiterplatte angeordnet sein, wobei beispielsweise die Induktionsheizleitungen jeweils zumindest einen Teilbereich auf jeder Lage der Leiterplatte aufweisen könnten. Alternativ könnte sich zumindest eine erste Induktionsheizleitung der Induktionsheizleitungen über eine erste Lage der Leiterplatte und zumindest eine zweite Induktionsheizleitung der Induktionsheizleitungen, welche insbesondere von der ersten Induktionsheizleitung verschieden sein könnte, über eine zweite Lage der Leiterplatte erstrecken, welche insbesondere von der ersten Lage verschieden sein könnte. Beispielsweise könnte die Leiterplatte eine größere Anzahl an Lagen aufweisen, wie beispielsweise zumindest drei, insbesondere zumindest vier, vorteilhaft zumindest sechs und vorzugsweise mehrere Lagen, über die sich die Induktionsheizleitungen insbesondere erstrecken könnten. Die Leiterplatte weist insbesondere zumindest zwei Durchbrüche auf, welche insbesondere zumindest zwei Lagen der Leiterplatte miteinander verbinden. Insbesondere wechseln die Induktionsheizleitungen an den Durchbrüchen von einer Lage der Leiterplatte auf eine weitere Lage der Leiterplatte. Eine Anzahl an Durchbrüchen ist insbesondere zumindest so groß wie eine Anzahl an Induktionsheizleitungen. Vorteilhaft ist eine Anzahl an Durchbrüchen größer als eine Anzahl an Induktionsheizleitungen. Dadurch kann insbesondere eine besonders hohe Effizienz erreicht werden.

Ferner wird vorgeschlagen, dass die Leiterplatte in wenigstens einem abgewickelten Zustand flächig ausgebildet und in wenigstens einem montierten Zustand zu einer Spule gewickelt ist. Alternativ könnte die Leiterplatte in dem abgewickelten Zustand, insbesondere aufgrund einer Vielzahl an Faltungen der Leiterplatte, eine von einer flächigen Gestalt abweichende Gestalt aufweisen. Beispielsweise könnte die Leiterplatte in wenigstens einem montierten Zustand, in welchem die Leiterplatte erfindungsgemäß zu einer Spule gewickelt ist, insbesondere zu einer Schraube gewickelt sein und insbesondere eine wenigstens im Wesentlichen schraubenförmige Gestalt aufweisen. Alternativ oder zusätzlich könnte die Leiterplatte in wenigstens einem montierten Zustand, in welchem die Leiterplatte erfindungsgemäss zu einer Spule gewickelt ist, insbesondere zu einer Schnecke gewickelt sein und insbesondere eine wenigstens im Wesentlichen schneckenförmige Gestalt aufweisen. Unter einem "flächigen" Objekt soll in diesem Zusammenhang insbesondere ein flaches Objekt verstanden werden, welches insbesondere zumindest eine Erstreckung, insbesondere eine Längserstreckung und/oder Quererstreckung, aufweist, welche wesentlich größer ist als eine Dicke des Objekts. Beispielsweise könnte die flächig ausgebildete Leiterplatte in dem abgewickelten Zustand eine wenigstens im Wesentlichen plattenförmige Gestalt aufweisen. Alternativ oder zusätzlich könnte die flächig ausgebildete Leiterplatte in dem abgewickelten Zustand insbesondere eine wenigstens im Wesentlichen bandförmige Gestalt aufweisen. Unter einer "Längserstreckung" eines Objekts soll, insbesondere in einem ungefalteten Zustand des Objekts, insbesondere eine Länge einer längsten Seite eines kleinsten gedachten geometrischen Quaders verstanden werden, welcher das Objekt gerade noch vollständig umschließt. Unter einer "Quererstreckung" eines Objekts soll insbesondere eine Erstreckung verstanden werden, welche senkrecht zu einer Längserstreckung des Objekts und zu einer Dicke des Objekts ausgerichtet ist. Unter einem "abgewickelten Zustand" soll insbesondere ein Zustand verstanden werden, in welchem sich die Leiterplatte insbesondere in Folge einer Abwicklung der Spule in einer Ebene befindet. Beispielsweise könnte die Leiterplatte in dem abgewickelten Zustand gefaltet oder ungefaltet sein. Die Induktionskochfeldvorrichtung weist insbesondere die Spule auf. Insbesondere weist die Spule die Induktionsheizleitungen auf. Unter einer "Spule" soll insbesondere ein induktives Bauelement mit zumindest einer insbesondere bestimmten Induktivität verstanden werden. Insbesondere weist die Spule mindestens fünf, insbesondere mindestens zehn, vorteilhaft mindestens fünfzehn und bevorzugt mindestens zwanzig Wicklungen auf. Beispielsweise könnten Wicklungen zumindest eines Spulenabschnitts in mehreren Ebenen angeordnet sein. Vorzugsweise sind Wicklungen zumindest eines Spulenabschnitts in einer Ebene angeordnet. Dadurch kann insbesondere eine kompakte Ausgestaltung und/oder eine vorteilhafte Beheizung von insbesondere aufgestelltem Gargeschirr erreicht werden. Aufgrund der Anordnung der Induktionsheizleitungen an und/oder in der Leiterplatte kann insbesondere eine hohe Reproduzierbarkeit bei einer Herstellung, insbesondere in einem Vergleich zu herkömmlichen Ausgestaltungen, bei welchen die Induktionsheizleitungen unter Vermeidung einer Anordnung an und/oder in einer Leiterplatte zu einer Spule gewickelt sind, erzielt werden, wodurch insbesondere bei hohen Frequenzen eine zuverlässige und/oder zufriedenstellende Kopplung zwischen Spule und zu beheizendem Gargeschirr ermöglicht werden kann.

Die Leiterplatte könnte beispielsweise frei von Faltkanten und/oder Faltungen sein. Vorzugsweise weist die Leiterplatte zumindest eine Faltkante auf, entlang derer die Leiterplatte in wenigstens einem montierten Zustand gefaltet ist. Insbesondere weist die an der Faltkante in wenigstens einem montierten Zustand gefaltete Leiterplatte eine Faltung auf. Eine Anzahl an Faltungen und eine Anzahl an Faltkanten ist insbesondere wenigstens im Wesentlichen und vorteilhaft vollständig identisch. Insbesondere weist die Leiterplatte zumindest einen ersten Abschnitt und zumindest einen zweiten Abschnitt auf, welche insbesondere durch die Faltkante voneinander getrennt sind und vorteilhaft an der Faltkante einander angrenzen. In wenigstens einem gefalteten Zustand sind eine Haupterstreckungsebene des ersten Abschnitts und eine Haupterstreckungsebene des zweiten Abschnitts insbesondere wenigstens im Wesentlichen parallel zueinander ausgerichtet und insbesondere in einer parallel zu einer Dicke der Leiterplatte ausgerichteten Richtung nebeneinander angeordnet. Unter einer "Haupterstreckungsebene" eines Objekts soll, insbesondere in einem ungefalteten Zustand des Objekts, insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Ausgehend von wenigstens einem ungefalteten Zustand ist der erste Abschnitt in wenigstens einem gefalteten Zustand insbesondere um wenigstens im Wesentlichen 180° relativ zu dem zweiten Abschnitt um die Faltkante verschwenkt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einem "gefalteten Zustand" der Leiterplatte soll insbesondere ein Zustand verstanden werden, in welchem die Leiterplatte um zumindest eine Faltkante gefaltet ist und insbesondere zumindest eine Faltung aufweist. Unter einem "ungefalteten Zustand" der Leiterplatte soll insbesondere ein Zustand verstanden werden, in welchem die Leiterplatte frei von Faltungen ist und in welchem die Leiterplatte insbesondere eine wenigstens im Wesentlichen plattenförmige Gestalt aufweist und in welchem insbesondere ein Dicke der Leiterplatte an jeder beliebigen Stelle wenigstens im Wesentlichen und vorteilhaft vollständig identisch ist. Dadurch kann insbesondere eine hohe Packungsdichte von Induktionsheizleitungen und/oder eine kompakte Ausgestaltung erzielt werden.

Weiterhin wird vorgeschlagen, dass die Faltkante frei ist von Induktionsheizleitungen. Insbesondere verläuft die Faltkante in wenigstens einem ungefalteten Zustand der Leiterplatte und bei einer senkrechten Betrachtung der Leiterplatte auf eine Haupterstreckungsebene der Leiterplatte wenigstens im Wesentlichen zwischen zwei benachbart zueinander angeordneten Induktionsheizleitungen. In wenigstens einem ungefalteten Zustand der Leiterplatte und bei einer senkrechten Betrachtung der Leiterplatte auf eine Haupterstreckungsebene der Leiterplatte ist die Faltkante insbesondere wenigstens im Wesentlichen parallel zu zumindest einer und vorteilhaft zu beiden benachbart zueinander angeordneten Induktionsheizleitungen ausgerichtet. Dadurch kann die Leiterplatte insbesondere problemlos und/oder ordnungsgemäß und/oder unter Vermeidung einer Beeinträchtigung einer Funktion der Induktionsheizleitungen gefaltet werden.

Beispielsweise könnte die Leiterplatte genau eine Faltkante und in wenigstens einem gefalteten Zustand genau eine Faltung aufweisen. Vorzugsweise weist die Leiterplatte zumindest eine weitere Faltkante auf, entlang derer die Leiterplatte in wenigstens einem montierten Zustand gefaltet ist und welche insbesondere zumindest in wenigstens einem ungefalteten Zustand der Leiterplatte wenigstens im Wesentlichen parallel zu der Faltkante verläuft. Insbesondere weist die Leiterplatte zumindest zwei, insbesondere zumindest drei, vorteilhaft zumindest vier, besonders vorteilhaft zumindest sechs, vorzugsweise zumindest zehn und besonders bevorzugt mehrere weitere Faltkanten auf, entlang derer die Leiterplatte in wenigstens einem montierten Zustand gefaltet ist und welche wenigstens im Wesentlichen parallel zu der Faltkante und zueinander verlaufen. Dadurch kann insbesondere eine mehrmalige Faltung der Leiterplatte ermöglicht werden, wodurch insbesondere in einem Vergleich zu lediglich einer Faltkante eine kompaktere Ausgestaltung und/oder eine höhere Packungsdichte ermöglicht werden können/kann.

Zudem wird vorgeschlagen, dass die Leiterplatte in zumindest einer Querschnittsbetrachtung zumindest einen Abschnitt aufweist, welcher eine Längserstreckung aufweist, die in einer Einbaulage wenigstens im Wesentlichen vertikal angeordnet ist. Der Abschnitt weist die Längserstreckung insbesondere in der Querschnittsbetrachtung der Leiterplatte und insbesondere in wenigstens einem gewickelten Zustand der Leiterplatte und/oder in wenigstens einem montierten Zustand der Leiterplatte auf. In einer Einbaulage ist die Längserstreckung des Abschnitts insbesondere wenigstens im Wesentlichen senkrecht zu einer Haupterstreckungsebene einer Kochfeldplatte ausgerichtet. Insbesondere weist die Induktionskochfeldvorrichtung zumindest eine Kochfeldplatte auf, welche insbesondere zu einem Aufstellen von Gargeschirr vorgesehen ist und welche insbesondere zumindest einen Teil eines Kochfeldaußengehäuses ausbildet. Der Abschnitt ist insbesondere zwischen einer Faltkante und einer weiteren Faltkante und/oder zwischen einer Faltkante und einem Rand der Leiterplatte angeordnet. Insbesondere weist der Abschnitt in der Querschnittsbetrachtung der Leiterplatte und insbesondere in wenigstens einem gewickelten Zustand der Leiterplatte und/oder in wenigstens einem montierten Zustand der Leiterplatte eine wenigstens im Wesentlichen rechteckige Gestalt auf, wodurch insbesondere eine besonders hohe Packungsdichte und/oder eine besonders kompakte Ausgestaltung erzielt werden können/kann. Vorteilhaft weist die Leiterplatte in zumindest einer Querschnittsbetrachtung zumindest zwei, insbesondere zumindest vier, vorteilhaft zumindest acht und vorzugsweise mehrere Abschnitte auf, welche insbesondere jeweils eine Längserstreckung aufweisen, die in einer Einbaulage wenigstens im Wesentlichen vertikal angeordnet ist. Zwei einander benachbart angeordnete Abschnitte der Leiterplatte sind insbesondere durch zumindest eine Faltkante und/oder durch zumindest eine Faltung voneinander getrennt und grenzen insbesondere an der Faltkante und/oder an der Faltung aneinander an. Unter einer "Querschnittsbetrachtung" der Leiterplatte soll insbesondere eine Betrachtungsweise in einer Blickrichtung verstanden werden, die parallel zu einer Längserstreckungsrichtung der Leiterplatte in wenigstens einem abgewickelten Zustand der Leiterplatte ausgerichtet ist. Unter einer "Längserstreckungsrichtung" eines Objekts soll, insbesondere in einem ungefalteten Zustand des Objekts, insbesondere eine Richtung verstanden werden, welche parallel zu einer längsten Seite eines kleinsten gedachten geometrischen Quaders ausgerichtet ist, welcher das Objekt gerade noch vollständig umschließt. Besonders vorteilhaft ist eine Anzahl an Induktionsheizleitungen ein Vielfaches einer Anzahl an Abschnitten der Leiterplatte und/oder einer Anzahl an Lagen der Leiterplatte, um insbesondere eine symmetrische Ausgestaltung und damit insbesondere eine einfache Herstellung zu ermöglichen. Insbesondere ist eine Anzahl an Faltungen und/oder Faltkanten kleiner, und zwar insbesondere um einen Wert von eins kleiner, als eine Anzahl an Abschnitten. Dadurch kann insbesondere eine hohe Packungsdichte und/oder eine einfache Herstellung einer Wicklung eines Induktionsheizelements erreicht werden. Aufgrund der im Wesentlichen senkrechten Orientierung und/oder Anordnung des Abschnitts können insbesondere geringe Wechselstromverluste und/oder eine hohe Dichte an Induktionsheizleitungen erzielt werden, wodurch insbesondere eine hohe Leistungsfähigkeit erreicht werden kann.

Weiterhin wird vorgeschlagen, dass zumindest eine Induktionsheizleitung der Induktionsheizleitungen in wenigstens einem abgewickelten Zustand senkrecht zu einer Längserstreckungsrichtung der Leiterplatte wenigstens abschnittsweise versetzt ist. Insbesondere weist die Induktionsheizleitung zumindest einen ersten Heizleitungsabschnitt und zumindest einen zweiten Heizleitungsabschnitt auf, welcher in wenigstens einem abgewickelten Zustand senkrecht zu einer Längserstreckungsrichtung der Leiterplatte zu dem ersten Heizleitungsabschnitt beabstandet angeordnet ist. Dadurch kann insbesondere eine besonders hohe Effizienz ermöglicht werden. Insbesondere kann eine gegenseitige Beeinflussung benachbarter Induktionsheizleitungen gering gehalten werden.

Eine Effizienz kann insbesondere weiter erhöht werden durch ein Verfahren zu einer Herstellung einer Induktionskochfeldvorrichtung, mit zumindest zwei Induktionsheizleitungen und mit zumindest einer Leiterplatte, wobei die Induktionsheizleitungen an und/oder in der Leiterplatte angeordnet werden, wobei die Leiterplatte als eine flexible Leiterplatte ausgebildet ist und entlang zumindest einer Faltkante der Leiterplatte gefaltet wird. Beispielsweise könnte die Leiterplatte zumindest eine Beschichtung aufweisen, welche wenigstens zu einem Großteil über eine insbesondere gesamte Flächenerstreckung der Leiterplatte an der Leiterplatte angeordnet und insbesondere elektrisch leitfähig sein könnte. Die Beschichtung könnte insbesondere wenigstens zu einem Großteil aus Kupfer und/oder Aluminium und/oder Gold und/oder Silber bestehen. Insbesondere könnten die Induktionsheizleitungen durch Abtragen zumindest eines Teils und insbesondere zumindest eines Großteils der Beschichtung an der Leiterplatte angeordnet werden. Alternativ oder zusätzlich könnten die Induktionsheizleitungen auf die Leiterplatte aufgedruckt und/oder aufgedampft und/oder aufgebracht werden. Die Induktionsheizleitungen könnten alternativ oder zusätzlich in die Leiterplatte eingebracht werden, wie beispielsweise mittels eines Ätzprozesses und/oder mittels eines Laserprozesses.

Die Induktionskochfeldvorrichtung soll hierbei nicht auf die oben beschriebene Anwendung und Ausführungsform beschränkt sein. Insbesondere kann die Induktionskochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Induktionskochfeld mit einer Induktionskochfeldvorrichtung in einer schematischen Draufsicht,
- Fig. 2: eine Leiterplatte und zehn Induktionsheizleitungen der Induktionskochfeldvorrichtung in einer schematischen teilweisen Schnittdarstellung, wobei eine der Induktionsheizleitungen durch eine Schraffur hervorgehoben ist, wodurch deren Positionswechsel in einer Längserstreckungsrichtung der Leiterplatte ersichtlich wird,
- Fig. 3: einen Ausschnitt der Leiterplatte und die Induktionsheizleitungen in einer schematischen Draufsicht auf eine erste Lage der Leiterplatte, wobei die Leiterplatte durchsichtig dargestellt ist,
- Fig. 4: einen Ausschnitt der Leiterplatte und die Induktionsheizleitungen in einer schematischen Draufsicht auf eine zweite Lage der Leiterplatte, wobei die Leiterplatte durchsichtig dargestellt ist,
- Fig. 5: eine Überlagerung der Figuren 3 und 4, wobei die Leiterplatte durchsichtig dargestellt ist,
- Fig. 6: einen Ausschnitt einer zu einer Spule gewickelten Leiterplatte und fünf Induktionsheizleitungen einer alternativen Induktionskochfeldvorrichtung in einer schematischen Darstellung, wobei auf eine Darstellung eines Positionswechsels der Induktionsheizleitungen der Einfachheit halber verzichtet wurde,
- Fig. 7: einen Ausschnitt der zu einer Spule gewickelten Leiterplatte und die Induktionsheizleitungen in einer schematischen Schnittdarstellung,
- Fig. 8: einen Ausschnitt einer zu einer Spule gewickelten Leiterplatte und fünf Induktionsheizleitungen einer alternativen Induktionskochfeldvorrichtung in einer schematischen Darstellung, wobei auf eine Darstellung eines Positionswechsels der Induktionsheizleitungen der Einfachheit halber verzichtet wurde,
- Fig. 9: einen vergrößerten Ausschnitt von Fig. 8 in einer schematischen teilweisen Schnittdarstellung,
- Fig. 10: einen Ausschnitt der Leiterplatte in einem abgewickelten und ungefalteten Zustand in einer schematischen Darstellung,
- Fig. 11: einen Ausschnitt der Leiterplatte in einem ersten Verfahrensschritt in einer schematischen Darstellung,
- Fig. 12: einen Ausschnitt der Leiterplatte in einem weiteren Verfahrensschritt in einer schematischen Darstellung,
- Fig. 13: einen Ausschnitt einer zu einer Spule gewickelten Leiterplatte und fünf Induktionsheizleitungen einer alternativen Induktionskochfeldvorrichtung in einer schematischen Darstellung, wobei auf eine Darstellung eines Positionswechsels der Induktionsheizleitungen der Einfachheit halber verzichtet wurde, und
- Fig. 14: einen vergrößerten Ausschnitt von Fig. 13 in einer schematischen teilweisen Schnittdarstellung.

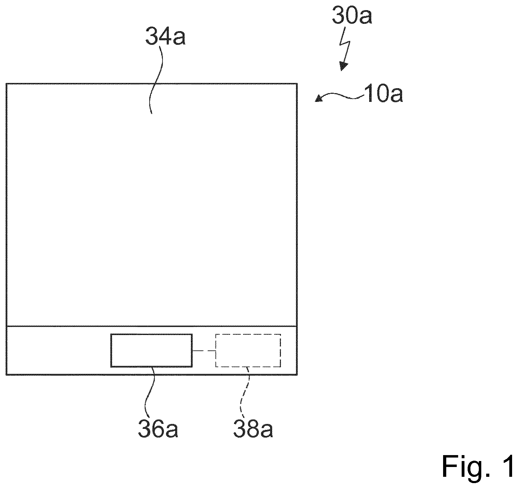

Fig. 1 zeigt ein Induktionskochfeld 30a mit einer Induktionskochfeldvorrichtung 10a. Die Induktionskochfeldvorrichtung 10a weist eine Kochfeldplatte 34a auf. In einem montierten Zustand bildet die Kochfeldplatte 34a einen Teil eines Kochfeldaußengehäuses, insbesondere des Induktionskochfelds 30a, aus. Die Kochfeldplatte 34a bildet in einer Einbaulage einen einem Bediener zugewandten Teil des Kochfeldaußengehäuses aus. In einem montierten Zustand ist die Kochfeldplatte 34a zu einem Aufstellen von Gargeschirr vorgesehen.

Die Induktionskochfeldvorrichtung 10a weist eine Bedienerschnittstelle 36a zu einer Eingabe und/oder Auswahl von Betriebsparametern (vgl. Fig. 1), beispielsweise einer Heizleistung und/oder einer Heizleistungsdichte und/oder einer Heizzone auf. Die Bedienerschnittstelle 36a ist zu einer Ausgabe eines Werts eines Betriebsparameters an einen Bediener vorgesehen. Beispielsweise könnte die Bedienerschnittstelle 36a den Wert des Betriebsparameters an einen Bediener optisch und/oder akustisch ausgeben.

Die Induktionskochfeldvorrichtung 10a weist eine Steuereinheit 38a auf. Die Steuereinheit 38a ist dazu vorgesehen, in Abhängigkeit von mittels der Bedienerschnittstelle 36a eingegebenen Betriebsparametern Aktionen auszuführen und/oder Einstellungen zu verändern.

Die Induktionskochfeldvorrichtung 10a weist eine Vielzahl von Induktionsheizelementen 40a auf (im vorliegenden Ausführungsbeispiel nicht dargestellt). Beispielsweise könnten die Induktionsheizelemente 40a in einer Reihe angeordnet sein. Alternativ oder zusätzlich könnten die Induktionsheizelemente 40a in Form einer Matrix angeordnet sein. Die Induktionsheizelemente 40a könnten alternativ in Form eines klassischen Kochfelds angeordnet sein, bei welchem jedes der Induktionsheizelemente 40a beispielsweise eine eigenständige Heizzone definieren und/oder ausbilden könnte. Im Folgenden wird lediglich eines der Induktionsheizelemente 40a beschrieben.

Das Induktionsheizelement 40a ist dazu vorgesehen, auf der Kochfeldplatte 34a oberhalb des Induktionsheizelements 40a aufgestelltes Gargeschirr zu erhitzen. In einem Betriebszustand stellt das Induktionsheizelement 40a, welches insbesondere aktiviert ist, einen magnetischen Fluss bereit, welcher insbesondere zu einer Erhitzung von aufgestelltem Gargeschirr vorgesehen ist. Das Induktionsheizelement 40a, welches insbesondere aktiviert ist, führt in einem Betriebszustand aufgestelltem Gargeschirr, insbesondere mittels des von dem Induktionsheizelement 40a bereitgestellten magnetischen Flusses, Energie zu. Die Steuereinheit 38a regelt in einem Betriebszustand eine Energiezufuhr zu dem insbesondere aktivierten Induktionsheizelement 40a. In einer Einbaulage ist das Induktionsheizelement 40a unterhalb der Kochfeldplatte 34a angeordnet.

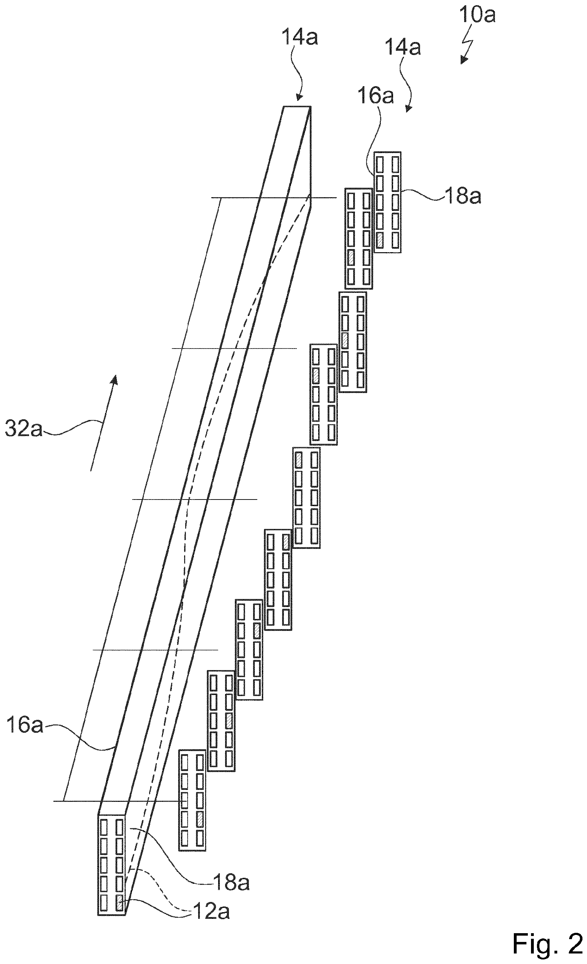

Die Induktionskochfeldvorrichtung 10a weist im vorliegenden Ausführungsbeispiel zehn Induktionsheizleitungen 12a auf (vgl. Fig. 2 bis 5). Von mehrfach vorhandenen Objekten ist in den Figuren jeweils lediglich eines mit einem Bezugszeichen versehen. Die Induktionsheizleitungen 12a bestehen zu einem Großteil aus Kupfer.

Die Induktionskochfeldvorrichtung 10a weist eine Leiterplatte 14a auf (vgl. Fig. 2 bis 5). Die Induktionsheizleitungen 12a sind im vorliegenden Ausführungsbeispiel in der Leiterplatte 14a angeordnet. Alternativ könnten die Induktionsheizleitungen 12a an der Leiterplatte 14a angeordnet sein.

Die Leiterplatte 14a ist als eine flexible Leiterplatte ausgebildet. Im vorliegenden Ausführungsbeispiel weist die Leiterplatte 14a eine Dicke von im Wesentlichen 50 µm auf. Die Leiterplatte 14a ist im vorliegenden Ausführungsbeispiel zweilagig ausgebildet. Die Leiterplatte 14a weist zwei Lagen 16a, 18a auf, und zwar eine erste Lage 16a und eine zweite Lage 18a.

Jede der Induktionsheizleitungen 12a weist zumindest einen ersten Teilbereich auf, der sich teilweise über die erste Lage 16a erstreckt. Jede der Induktionsheizleitungen 12a weist zumindest einen zweiten Teilbereich auf, der sich teilweise über die zweite Lage 18a erstreckt. Die Induktionsheizleitungen 12a erstrecken sich über die Lagen 16a, 18a der Leiterplatte 14a.

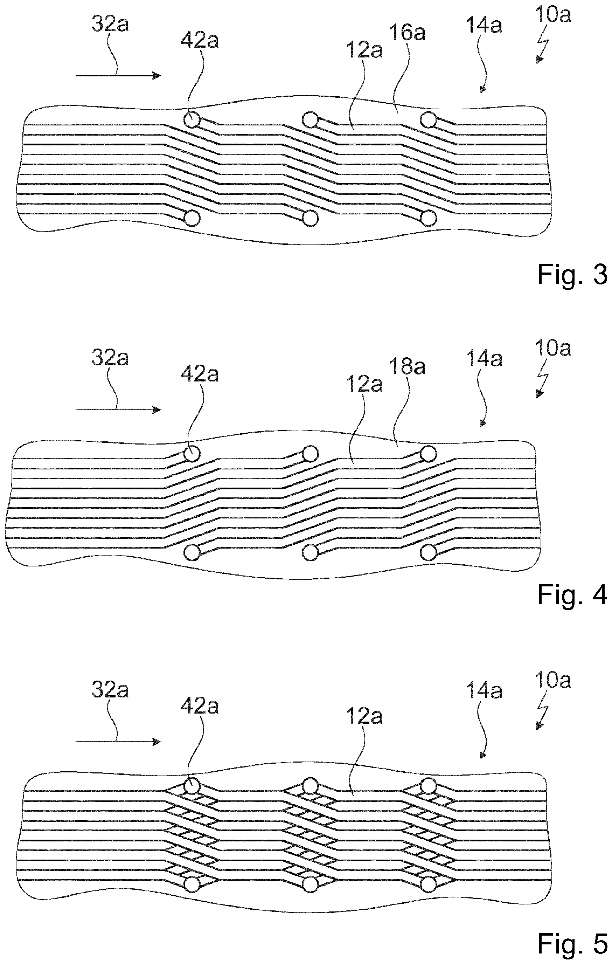

Im vorliegenden Ausführungsbeispiel weist die Leiterplatte 14a mehrere Durchbrüche 42a auf (vgl. Fig. 3 bis 5). An den Durchbrüchen 42a wechseln die Induktionsheizleitungen 12a zwischen den Lagen 16a, 18a der Leiterplatte 14a.

Die Induktionsheizleitungen 12a sind elektrisch parallel zueinander geschaltet. Die Induktionsheizleitungen 12a sind Teil des Induktionsheizelements 40a. Das Induktionsheizelement 40a weist eine Spule 20a auf (im vorliegenden Ausführungsbeispiel nicht dargestellt). Die Leiterplatte 14a ist in einem montierten Zustand zu einer Spule 20a gewickelt.

In einem abgewickelten Zustand ist die Leiterplatte 14a flächig ausgebildet (vgl. Fig. 2). In einem abgewickelten Zustand der Leiterplatte 14a sind die Induktionsheizleitungen 12a senkrecht zu einer Längserstreckungsrichtung 32a der Leiterplatte 14a abschnittsweise versetzt (vgl. Fig. 3 bis 5).

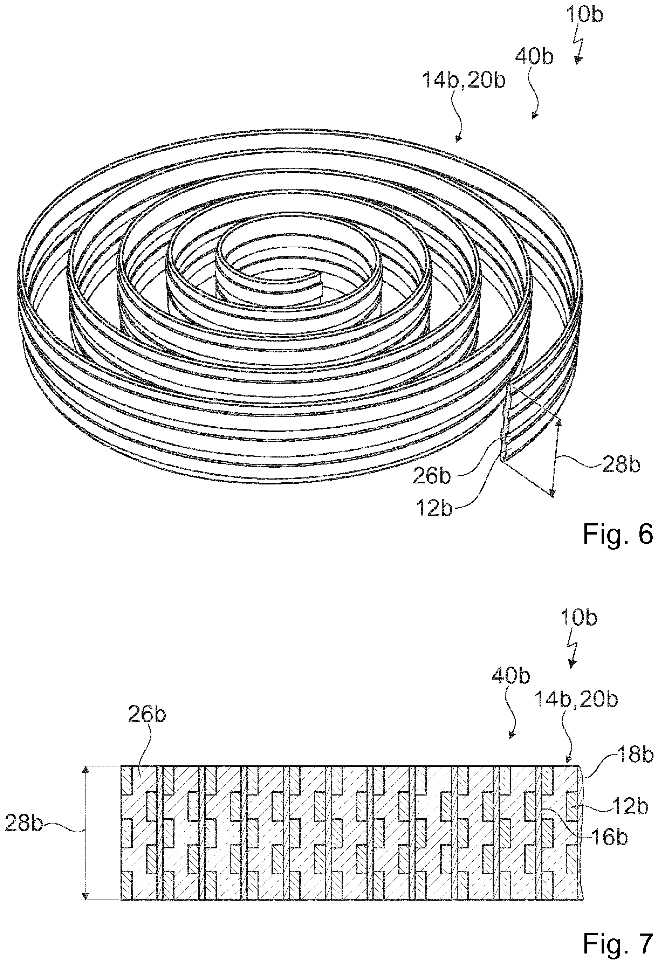

In Fig. 6 bis 14 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b bis d in den Bezugszeichen der Ausführungsbeispiele der Fig. 6 bis 14 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 5 verwiesen werden.

Fig. 6 zeigt einen Ausschnitt einer in einem montierten Zustand zu einer Spule 20b gewickelten Leiterplatte 14b einer alternativen Induktionskochfeldvorrichtung 10b. Die Induktionskochfeldvorrichtung 10b weist im vorliegenden Ausführungsbeispiel fünf Induktionsheizleitungen 12b auf.

Die Induktionsheizleitungen 12b sind im vorliegenden Ausführungsbeispiel an der Leiterplatte 14b angeordnet. Alternativ könnten die Induktionsheizleitungen 12b in der Leiterplatte 14b angeordnet sein.

In einem abgewickelten Zustand der Leiterplatte 14b sind die Induktionsheizleitungen 12b senkrecht zu einer Längserstreckungsrichtung 32b der Leiterplatte 14b abschnittsweise versetzt, wenngleich der Einfachheit halber auf eine derartige Darstellung verzichtet wurde und die Induktionsheizleitungen 12b geradlinig dargestellt wurden.

In einer Querschnittsbetrachtung weist die Leiterplatte 14b einen Abschnitt 26b auf. Im vorliegenden Ausführungsbeispiel ist der Abschnitt 26b von der gesamten Leiterplatte 14b gebildet. Der Abschnitt 26b weist eine Längserstreckung 28b auf, die in einer Einbaulage im Wesentlichen vertikal angeordnet ist. In einem abgewickelten Zustand der Leiterplatte 14b weist die Leiterplatte 14b eine Haupterstreckungsebene auf, welche in einer Einbaulage im Wesentlichen vertikal angeordnet ist.

Fig. 7 zeigt ausgehend von einem Zentrum der in einem montierten Zustand zu einer Spule 20b gewickelten Leiterplatte 14b elf Wicklungen der Leiterplatte 14b in einer Querschnittsdarstellung. Zu erkennen ist eine hohe Packungsdichte an Induktionsheizleitungen 12b. Besonders vorteilhaft kann in einem Vergleich zu einer planaren Anordnung eine negative Beeinflussung benachbart angeordneter Wicklungen, insbesondere in Form einer negativen und/oder beeinflussenden Kapazität, wesentlich reduziert werden.

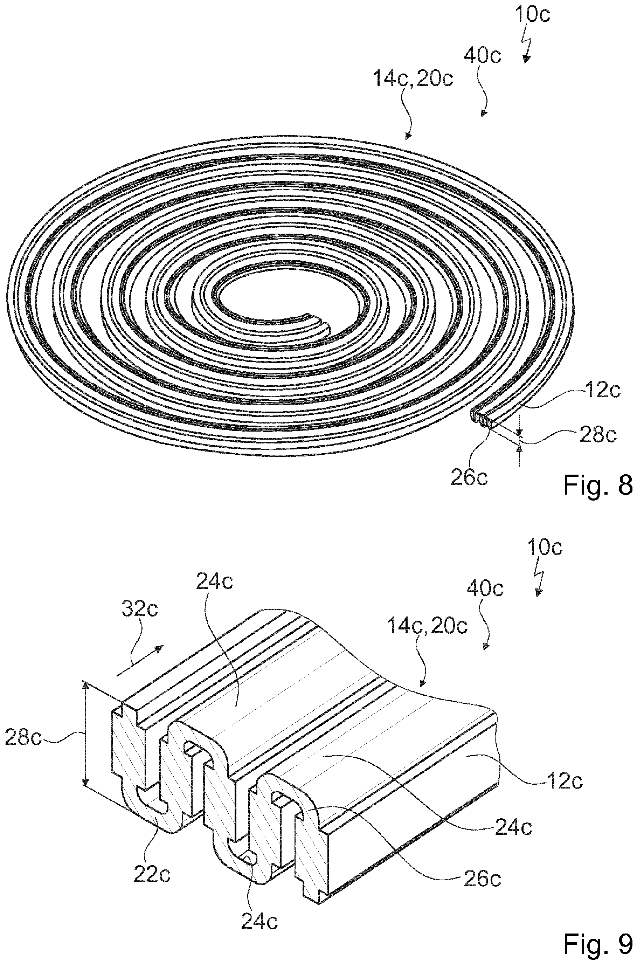

Fig. 8 zeigt einen Ausschnitt einer in einem montierten Zustand zu einer Spule 20c gewickelten Leiterplatte 14c einer alternativen Induktionskochfeldvorrichtung 10c. Die Induktionskochfeldvorrichtung 10c weist im vorliegenden Ausführungsbeispiel fünf Induktionsheizleitungen 12c auf (vgl. auch Fig. 9). In einem abgewickelten Zustand der Leiterplatte 14c sind die Induktionsheizleitungen 12c senkrecht zu einer Längserstreckungsrichtung 32c der Leiterplatte 14c abschnittsweise versetzt, wenngleich der Einfachheit halber auf eine derartige Darstellung verzichtet wurde und die Induktionsheizleitungen 12c geradlinig dargestellt wurden.

Die Leiterplatte 14c weist eine Faltkante 22c auf (vgl. Fig. 9, 11 und 12). In einem montierten Zustand ist die Leiterplatte 14c entlang der Faltkante 22c gefaltet. Die Faltkante 22c ist im Wesentlichen parallel zu einem Rand der Leiterplatte 14c ausgerichtet. In einem abgewickelten Zustand der Leiterplatte 14c ist die Faltkante 22c im Wesentlichen parallel zu einer Längserstreckungsrichtung 32c der Leiterplatte 14c ausgerichtet.

Neben der Faltkante 22c weist die Leiterplatte 14c im vorliegenden Ausführungsbeispiel drei weitere Faltkanten 24c auf. Im Folgenden wird lediglich eine der weiteren Faltkanten 24c beschrieben. In einem montierten Zustand ist die Leiterplatte 14c entlang der weiteren Faltkante 24c gefaltet. Die weitere Faltkante 24c ist im Wesentlichen parallel zu der Faltkante 22c ausgerichtet. Die weitere Faltkante 24c ist im Wesentlichen parallel zu einem Rand der Leiterplatte 14c ausgerichtet. In einem abgewickelten Zustand der Leiterplatte 14c ist die weitere Faltkante 24c im Wesentlichen parallel zu einer Längserstreckungsrichtung 32c der Leiterplatte 14c ausgerichtet.

In einer Querschnittsbetrachtung weist die Leiterplatte 14c im vorliegenden Ausführungsbeispiel fünf Abschnitte 26c auf. Die Abschnitte 26c weisen jeweils eine Längserstreckung 28c auf, die in einer Einbaulage im Wesentlichen vertikal angeordnet ist. Jeweils zwei der Abschnitte 26c sind benachbart zueinander angeordnet. Benachbart zueinander angeordnete Abschnitte 26c sind durch eine Faltkante 22c, 24c voneinander getrennt. Die Faltkanten 22c, 24c, also insbesondere die Faltkante 22c und die weitere Faltkante 24c, sind frei von Induktionsheizleitungen 12c.

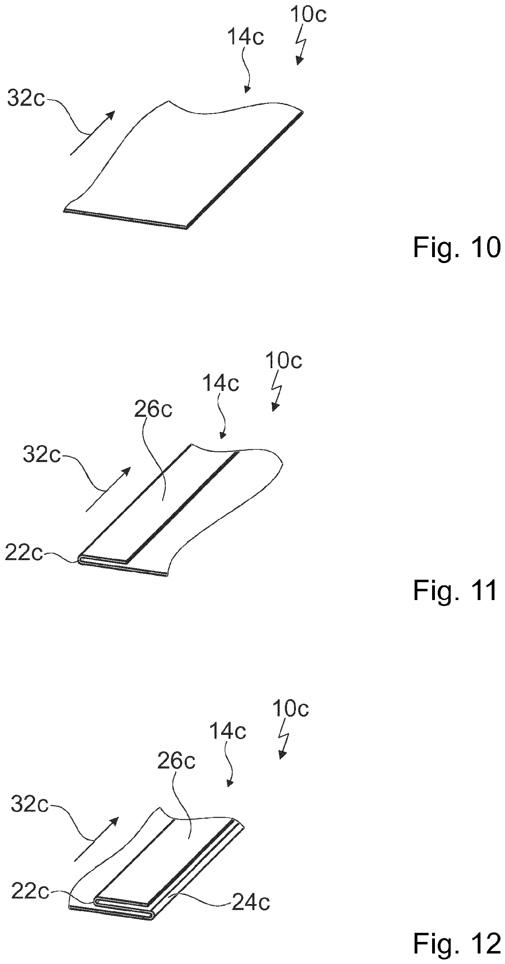

Fig. 10 zeigt einen Ausschnitt der Leiterplatte 14c in einem abgewickelten, ungefalteten Zustand. Ausgehend von einem abgewickelten, ungefalteten Zustand wird die Leiterplatte 14c, die als eine flexible Leiterplatte 14c ausgebildet ist, in einem Verfahren zu einer Herstellung der Induktionskochfeldvorrichtung 10c entlang der Faltkanten 22c, 24c der Leiterplatte 14c gefaltet. In einem Verfahrensschritt werden die Induktionsheizleitungen 12c an der Leiterplatte 14c angeordnet. Alternativ könnten die Induktionsheizleitungen 12c in einem Verfahrensschritt in der Leiterplatte 14c angeordnet werden.

In einem Verfahrensschritt wird die Leiterplatte 14c entlang der Faltkante 22c der Leiterplatte 14c gefaltet (vgl. Fig. 10 und 11). Die Leiterplatte 14c weist eine Faltung auf, entlang derer die Leiterplatte 14c gefaltet ist und welche durch die Faltkante 22c definiert und/oder vorgegeben ist. Im Anschluss an die Faltung der Leiterplatte 14c um die Faltkante 22c weist die Leiterplatte 14c zwei Abschnitte 26c auf.

In einem weiteren Verfahrensschritt wird die Leiterplatte 14c entlang der weiteren Faltkante 24c der Leiterplatte 14c gefaltet (vgl. Fig. 11 und 12). Die Leiterplatte 14c weist zwei Faltungen auf, entlang derer die Leiterplatte 14c gefaltet ist und welche durch die Faltkante 22c und die weitere Faltkante 24c definiert und/oder vorgegeben sind. Im Anschluss an die Faltung der Leiterplatte 14c um die Faltkante 22c sowie um die weitere Faltkante 24c weist die Leiterplatte 14c drei Abschnitte 26c auf (vgl. Fig. 12). Das Verfahren wird in dieser Art weitergeführt, bis eine gewünschte Anzahl an Abschnitten 26c erreicht ist.

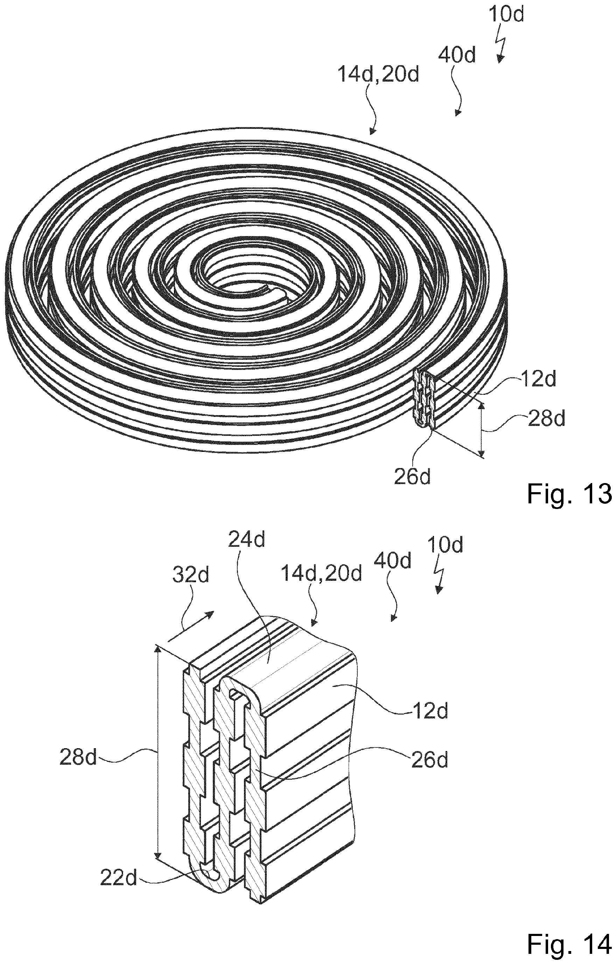

Fig. 13 zeigt einen Ausschnitt einer in einem montierten Zustand zu einer Spule 20d gewickelten Leiterplatte 14d einer alternativen Induktionskochfeldvorrichtung 10d. Die Induktionskochfeldvorrichtung 10d weist im vorliegenden Ausführungsbeispiel neun Induktionsheizleitungen 12d auf (vgl. auch Fig. 14). In einem abgewickelten Zustand der Leiterplatte 14d sind die Induktionsheizleitungen 12d senkrecht zu einer Längserstreckungsrichtung 32d der Leiterplatte 14d abschnittsweise versetzt, wenngleich der Einfachheit halber auf eine derartige Darstellung verzichtet wurde und die Induktionsheizleitungen 12d geradlinig dargestellt wurden.

Die Leiterplatte 14d weist eine Faltkante 22d auf (vgl. Fig. 13 und 14). In einem montierten Zustand ist die Leiterplatte 14d entlang der Faltkante 22d gefaltet. Neben der Faltkante 22d weist die Leiterplatte 14d im vorliegenden Ausführungsbeispiel eine weitere Faltkante 24d auf. In einem montierten Zustand ist die Leiterplatte 14d entlang der weiteren Faltkante 24d gefaltet. Die weitere Faltkante 24d ist im Wesentlichen parallel zu der Faltkante 22d ausgerichtet. Die weitere Faltkante 24d ist im Wesentlichen parallel zu einem Rand der Leiterplatte 14d ausgerichtet. In einem abgewickelten Zustand der Leiterplatte 14d ist die weitere Faltkante 24d im Wesentlichen parallel zu einer Längserstreckungsrichtung 32d der Leiterplatte 14d ausgerichtet.

In einer Querschnittsbetrachtung weist die Leiterplatte 14d im vorliegenden Ausführungsbeispiel drei Abschnitte 26d auf. Die Abschnitte 26d weisen jeweils eine Längserstreckung 28d auf, die in einer Einbaulage im Wesentlichen vertikal angeordnet ist.

### Bezugszeichen

- 10: Induktionskochfeldvorrichtung
- 12: Induktionsheizleitung
- 14: Leiterplatte
- 16: Lage
- 18: Lage
- 20: Spule
- 22: Faltkante
- 24: Weitere Faltkante
- 26: Abschnitt
- 28: Längserstreckung
- 30: Induktionskochfeld
- 32: Längserstreckungsrichtung
- 34: Kochfeldplatte
- 36: Bedienerschnittstelle
- 38: Steuereinheit
- 40: Induktionsheizelement
- 42: Durchbruch

## Patentansprüche

1. Induktionskochfeldvorrichtung mit zumindest zwei Induktionsheizleitungen (12a-d) und mit zumindest einer Leiterplatte (14a-d), an und/oder in welcher die Induktionsheizleitungen (12a-d) angeordnet sind, wobei die Leiterplatte (14a-d) als eine flexible Leiterplatte ausgebildet ist, **dadurch gekennzeichnet, dass** die Leiterplatte (14a-d) zu einer Spule (20a-d) gewickelt ist.

2. Induktionskochfeldvorrichtung nach Anspruch 1, **dadurch gekennzeichnet, dass** die Leiterplatte (14a-d) eine Dicke von maximal 300 µm aufweist.

3. Induktionskochfeldvorrichtung nach Anspruch 1 oder 2, **dadurch gekennzeichnet, dass** die Induktionsheizleitungen (12a-d) elektrisch parallel zueinander geschaltet sind.

4. Induktionskochfeldvorrichtung nach einem der vorhergehenden Ansprüche, **dadurch gekennzeichnet, dass** die Leiterplatte (14a-d) zumindest zwei Lagen (16a-d, 18a-d) aufweist, über die sich die Induktionsheizleitungen (12a-d) erstrecken.

5. Induktionskochfeldvorrichtung nach einem der vorhergehenden Ansprüche, **dadurch gekennzeichnet, dass** die Leiterplatte (14c-d) zumindest eine Faltkante (22c-d) aufweist, entlang derer die Leiterplatte (14c-d) gefaltet ist.

6. Induktionskochfeldvorrichtung nach Anspruch 5, **dadurch gekennzeichnet, dass** die Faltkante (22c-d) frei ist von Induktionsheizleitungen (12c-d).

7. Induktionskochfeldvorrichtung nach Anspruch 5 oder 6, **dadurch gekennzeichnet, dass** die Leiterplatte (14c-d) zumindest eine weitere Faltkante (24c-d) aufweist, entlang derer die Leiterplatte (14c-d) gefaltet ist und welche wenigstens im Wesentlichen parallel zu der Faltkante (22c-d) verläuft.

8. Induktionskochfeldvorrichtung nach einem der vorhergehenden Ansprüche, **dadurch gekennzeichnet, dass** die Leiterplatte (14b-d) in zumindest einer Querschnittsbetrachtung zumindest einen Abschnitt (26b-d) aufweist, welcher eine Längserstreckung (28b-d) aufweist, die in einer Einbaulage wenigstens im Wesentlichen vertikal angeordnet ist.

9. Induktionskochfeldvorrichtung nach einem der vorhergehenden Ansprüche, **dadurch gekennzeichnet, dass** zumindest eine Induktionsheizleitung (12a-d) der Induktionsheizleitungen (12a-d) in einem abgewickelten Zustand senkrecht zu einer Längserstreckungsrichtung (32a-d) der Leiterplatte (14a-d) wenigstens abschnittsweise versetzt ist.

10. Induktionskochfeld mit zumindest einer Induktionskochfeldvorrichtung (10a-d) nach einem der vorhergehenden Ansprüche.

11. Verfahren zu einer Herstellung einer Induktionskochfeldvorrichtung (10a-d) nach einem der Ansprüche 1 bis 9, mit zumindest zwei Induktionsheizleitungen (12a-d) und mit zumindest einer Leiterplatte (14a-d), wobei die Induktionsheizleitungen (12a-d) an und/oder in der Leiterplatte (14a-d) angeordnet werden, **dadurch gekennzeichnet, dass** die Leiterplatte (14a-d) als eine flexible Leiterplatte ausgebildet ist und entlang zumindest einer Faltkante (22a-d, 24a-d) der Leiterplatte (14a-d) gefaltet wird.

## Claims

1. Induction hob apparatus having at least two induction heating wires (12a-d) and having at least one circuit board (14a-d) on and/or in which the induction heating wires (12a-d) are arranged, wherein the circuit board (14a-d) is designed as a flexible circuit board, **characterised in that** the circuit board (14a-d) is wound to form a coil (20a-d).

2. Induction hob apparatus according to claim 1, **characterised in that** the circuit board (14a-d) has a thickness of a maximum 300 µm.

3. Induction hob apparatus according to claim 1 or 2, **characterised in that** the induction heating wires (12a-d) are switched in an electrical parallel manner with respect to one another.

4. Induction hob apparatus according to one of the preceding claims, **characterised in that** the circuit board (14a-d) has at least two layers (16a-d, 18a-d) over which the induction heating wires (12a-d) extend.

5. Induction hob apparatus according to one of the preceding claims, **characterised in that** the circuit board (14c-d) has at least one fold edge (22c-d) along which the circuit board (14c-d) is folded.

6. Induction hob apparatus according to claim 5, **characterised in that** the fold edge (22c-d) does not have any induction heating wires (12c-d).

7. Induction hob apparatus according to claim 5 or 6, **characterised in that** the circuit board (14c-d) has at least one further fold edge (24c-d) along which the circuit board (14c-d) is folded and which extends at least essentially parallel to the fold edge (22c-d).

8. Induction hob apparatus according to one of the preceding claims, **characterised in that** the circuit board (14b-d) has in at least one cross-sectional view at least one section (26b-d) which has a longitudinal extent (28b-d) which in an installed position is arranged at least essentially in a vertical manner.

9. Induction hob apparatus according to one of the preceding claims, **characterised in that** in an unwound state at least one induction heating wire (12a-d) of the induction heating wires (12a-d) is offset at least in sections in a perpendicular manner with respect to the longitudinal extent direction (32a-d) of the circuit board (14a-d).

10. Induction hob having at least one induction hob apparatus (10a-d) according to one of the preceding claims.

11. Method for producing an induction hob apparatus (10a-d) according to one of claims 1 to 9, having at least two induction heating wires (12a-d) and having at least one circuit board (14a-d), wherein the induction heating wires (12a-d) are arranged on and/or in the circuit board (14a-d), **characterised in that** the circuit board (14a-d) is designed as a flexible circuit board and is folded along at least one fold edge (22a-d, 24a-d) of the circuit board (14a-d).

## Revendications

1. Dispositif de table de cuisson à induction comprenant au moins deux conducteurs chauffants à induction (12a-d) et comprenant au moins une plaque conductrice (14a-d), sur laquelle et/ou dans laquelle se trouvent les conducteurs chauffants à induction (12a-d), la plaque conductrice (14a-d) étant réalisée en tant que plaque conductrice souple, **caractérisé en ce que** la plaque conductrice (14a-d) est enroulée en une bobine (20a-d).

2. Dispositif de table de cuisson à induction selon la revendication 1, **caractérisé en ce que** la plaque conductrice (14a-d) présente une épaisseur de maximum 300 µm.

3. Dispositif de table de cuisson à induction selon la revendication 1 ou 2, **caractérisé en ce que** les conducteurs chauffants à induction (12a-d) sont électriquement connectés l'une à l'autre en parallèle.

4. Dispositif de table de cuisson à induction selon l'une des revendications précédentes, **caractérisé en ce que** la plaque conductrice (14a-d) comprend au moins deux couches (16ad, 18a-d) au-dessus desquelles s'étendent les conducteurs chauffants à induction (12a-d).

5. Dispositif de table de cuisson à induction selon l'une des revendications précédentes, **caractérisé en ce que** la plaque conductrice (14c-d) comprend au moins un bord replié (22c-d) le long duquel la plaque conductrice (14c-d) est repliée.

6. Dispositif de table de cuisson à induction selon la revendication 5, **caractérisé en ce que** le bord replié (22c-d) ne contient pas de conducteurs chauffants à induction (12c-d).

7. Dispositif de table de cuisson à induction selon la revendication 5 ou 6, **caractérisé en ce que** la plaque conductrice (14c-d) comprend au moins un autre bord replié (24c-d), le long duquel la plaque conductrice (14c-d) est repliée et laquelle passe au moins essentiellement parallèlement au bord replié (22c-d).

8. Dispositif de table cuisson à induction selon l'une des revendications précédentes, **caractérisé en ce que** la plaque conductrice (14b-d) comprend au moins en vue transversale, au moins une section (26b-d) qui présente une extension longitudinale (28b-d) qui, encastrée, est disposée au moins essentiellement à la verticale.

9. Dispositif de table cuisson à induction selon l'une des revendications précédentes, **caractérisé en ce qu'**au moins un conducteur chauffant à induction (12a-d) parmi les conducteurs chauffants à induction (12a-d) est décalé au moins en partie, à l'état enroulé, à la perpendiculaire d'un sens d'extension longitudinale (32a-d) de la plaque conductrice (14ad).

10. Table de cuisson à induction comprenant au moins un dispositif de table de cuisson à induction (10a-d) selon l'une des revendications précédentes.

11. Procédé de fabrication d'un dispositif de table de cuisson à induction (10a-d) selon l'une des revendications 1 à 9, comprenant au moins deux conducteurs chauffants à induction (12a-d) et comprenant au moins une plaque conductrice (14a-d), les conducteurs chauffants à induction (12a-d) étant disposés sur et/ou dans la plaque conductrice (14a-d), **caractérisé en ce que** la plaque conductrice (14a-d) est réalisée en tant que plaque conductrice souple et est repliée le long d'au moins un bord replié (22a-d- 24a-d) de la plaque conductrice (14a-d).
